# EUROPEAN PATENT APPLICATION

(11) **EP 3 937 096 A1**
(43) Date of publication of application: **12.01.2022**
(21) Application number: 20184381.0
(22) Date of filing: 07.07.2020
(51) Int. Cl.: G06Q 10/00

(54) **DETERMINING AN OPTIMIZED STRATEGY FOR A SMART BUILDING**

(71) Applicant: Siemens Aktiengesellschaft, 80333 München (DE)
(72) Inventor: Joanni, Andreas, 80337 München (DE); Ratiu, Daniel, 80997 München (DE)

(57) **Abstract**

The invention is directed to a for determining an optimized strategy for a smart building, comprising the steps:
a. Providing a plurality of contracts or contractual alternatives of at least one contract about the smart building or at least one unit of the smart building(S1); wherein
c. each contract is defined in a domain-specific language (S2); wherein
d. each contract comprises at least one contractual requirement regarding the respective smart building or at least one unit of the smart building (S3);
e. Providing technical information regarding the respective smart building or at least one unit of the smart building (S4); wherein
f. the technical information is defined in a domain-specific language (S5) ;
g. Determining the optimized strategy using an optimization algorithm based on the plurality of contracts or the contractual alternatives and the technical information in accordance with the specified contractual requirement (S6); and
h. Providing the determined optimized strategy (S7).

Further, the invention relates to a corresponding technical unit and computer program product.

## Description

### 1. Technical field

The present invention relates to a computer-implemented method for determining an optimized strategy for a smart building. Further, the invention relates to a corresponding technical unit and a computer program product.

### 2. Prior art

Building automation is known from the prior art and is accordingly the automatic centralized control of a building's heating, ventilation and air conditioning, lighting and other systems through a building management system or building automation system ("BAS"). A building controlled by a BAS is often referred to as an intelligent building or smart building.

In the context of modern cities, smart infrastructure such as smart (self-adaptive) buildings will be able to autonomously plan and execute different tasks such as optimizing energy consumption, or calling out for maintenance services, with the overall mission to increasing habitability and performance of urban environments while minimizing cost and adverse environmental impact. For instance, public buildings like venue locations will be able to plan and balance resource consumption, comfort and service achievement.

When buildings are constructed or retrofitted, a balance should be achieved between construction costs and the costs of resource consumption e.g. water and energy over the lifetime of the building while providing the required service. Different construction alternatives regarding building shell, automation systems e.g. sliding doors or technical installation represent tradeoffs between different criteria of the customer, such as construction price, usage flexibility, etc.

Buildings play a key role in how sustainably and competitively organizations fulfil their mission: they impact financial and reputational strength, service delivery capability, as well as employee well-being and productivity. As of yet, optimization strategies mostly focus on one direction such as minimizing the energy or water consumption. In future, these optimizations strategies should be driven by the contractual terms negotiated and agreed with various external parties, e.g.
- Pricing of utilities: If the market price for energy is low, a smart building will plan to replenish its spare energy storage capacity. Or, if the smart building is equipped with energy production facilities (e.g. photovoltaic) then, depending on the region, it will be able to provide a significant reduction in operating costs (e.g. for cooling).
- Warranty: If the warranty period of building automation components commences when they are supplied to the building contractor and the warranty period is close to the one of the warranty provided to end customer, then having a too high spare parts inventory would lead to gaps in warranty coverage.
- Operation: Different technical solutions are enablers for operation strategies of buildings. For example, being able to change the configuration of the rented space in an office building requires an automation solution which supports fine grained rights management. However, this might be more expensive.
- Operating parameters like - e.g. configuration (closed/open office space), profile (weekends the building is empty or 50% occupied), one/multiple companies occupy a building floor, possibility to reconfigure the building with other facilities in a modular fashion (e.g. cafeteria, laboratory rooms) - drastically affect the initial investment and operating costs.
- Maintenance: Depending on the state of critical building components, and based on predictions of their remaining useful lives, the building may call out for maintenance services based on analyzing decision options and suggestion of optimal actions (prescriptive analytics). Decision options may include opportunistic maintenance policies - for instance, building components may be replaced although their useful life is not yet exhausted, but the overall savings of combining construction work are higher (fixed costs like securing the construction site or putting up scaffolding accrue only once).

These factors are severely influenced by contractual terms of a contract e.g. stipulated by a supplier.

Thereby, a contract can be interpreted in the common sense of the term as a legally binding agreement between two contractual parties, e.g. a manufacturer, the aforementioned supplier and a customer. Accordingly, the contracts can be split e.g. into supplier contracts and customer contracts. Examples of such contracts are listed further below. Further, the contract specifies the contractual object and further circumstances in the form of the aforementioned contractual terms, such as delivery date and warranty. In other words, the contract commonly involves the exchange of the contractual object such as a manufactured product or raw product, or the execution of a service.

The contract specifies the rights and obligations of the parties to the agreement. The contract can be legally enforceable because it meets the requirements and approval of the law. In the event of breach of contract, the law awards the injured party access to such as damages and cancellation.

The contractual terms can also be subject to negotiation between the manufacturer and the suppliers, or a choice can be made among possible suppliers offering the same type of products or services but with different contractual terms.

According to prior art, smart buildings are typically optimized only along a single dimension like e.g. achieving as much energy efficiency as possible. The contractual and, thereby, also financial optimization criteria are, firstly, not dealt with by the smart building itself which may be partly explained by the current insufficient and simplifying means of modeling and evaluating the consequences of the complex interrelations of contractual, commercial and technical aspects. More commonly, the contractual criteria are not seen as optimization parameter at all but as fixed conditions, which leads to suboptimal outcomes.

Moreover, the decision-making regarding the optimization of contractual aspects of buildings is done manually by facility managers who rely on past experience and best practice which is not optimal for all parties involved as explained above.

Hence, existing approaches tend to be overly simplified, informal and thereby do not support the complexity and expectations from the future smart buildings in particular, and smart infrastructure in general.

In summary, existing approaches disregard the complex interrelations of contractual, commercial, construction, automation and operation aspects such that the different contractual options can be analyzed, explored and re-negotiated in an automatic manner, or building operation strategies improved such that the value is maximized.

It is therefore an objective of the present invention to provide a computer-implemented method for determining an optimized strategy for a smart building in an efficient and reliable manner.

### 3. Summary of the invention

This problem is according to one aspect of the invention solved by a computer-implemented method for determining an optimized strategy for a smart building, comprising the steps:
a. Providing a plurality of contracts or contractual alternatives of at least one contract about the smart building or at least one unit of the smart building; wherein
c. each contract is defined in a domain-specific language; wherein
d. each contract comprises at least one contractual requirement regarding the respective smart building or at least one unit of the smart building;
e. Providing technical information regarding the respective smart building or at least one unit of the smart building; wherein
f. the technical information is defined in a domain-specific language;
g. Determining the optimized strategy using an optimization algorithm based on the plurality of contracts or the contractual alternatives and the technical information in accordance with the specified at least one contractual requirement; and
h. Providing the determined optimized strategy.

Accordingly, the invention is directed to a method for determining an optimized strategy for a smart building in context of building automation and especially smart buildings.

In the first steps a. to e., the input data sets are provided or received as input for the optimization step g., namely contracts and technical information. The contracts and technical information are defined in a domain-specific language. The input data sets can be received and/or transmitted via one or more interfaces of a technical unit, wherein the technical unit can be designed as any computing unit.

The contractual requirement can be considered as condition, term or clause which has to be fulfilled. This contractual requirement can be defined or specified by a user, such as an expert in the field of Building automation. For example, the expert can request the contractual output data for diverse use cases, which are explained further below. Thus, the strategy to be optimized can depend on the contractual request.

The contracts can be predefined, stored in a storage unit and/or retrieved from the storage unit as kind of reference data or templates.

The technical information can comprise any information related to or associated with the smart building or its units.

These input data sets are used to determine and provide the optimized strategy e.g. in response to a received contractual request using an optimization algorithm. The algorithm can also take the temporal sequence of decisions to be taken into account. Examples of such optimization algorithms include linear or nonlinear optimization algorithms, where the objective function is the expected benefit gained by the building owner or operator from executing one or a sequence of actions like ordering a service from a given supplier. The optimization variables are then the offered warranty duration, or the offered order price. In this context, constraints on the optimization variables like e.g. legal requirements on the minimum warranty duration may apply. If the sequence of actions to be taken is subject to optimization, then this may represent a mixed-integer optimization program. Thereby, the optimization is performed in the manner that the contractual output data meet contract request and the specified contractual requirement.

In another aspect the plurality of contracts comprises at least one contract between at least two parties selected from the group comprising:
a supplier contract; wherein
the supplier contract is a contract between at least one owner or operator of a smart building and at least one supplier; and
a customer contract; wherein
the customer contract is a contract between at least one customer and at least one owner or operator of a smart building. Accordingly, the contract type can be selected in a flexible manner according to the specific application case, underlying technical system and user requirements. Thereby, the customer can be a tenant.

In another aspect the determined optimized strategy is selected from the group comprising:
- energy-saving strategy directed to saving energy of the smart building or the at least one unit;
- Occupant-capability strategy directed to adapting at least one occupancy criterion of the smart building or the at least one unit;
- Occupant-comfort directed to increasing the occupant comfort;
- Performance strategy directed to increasing the performance of the smart building or the at least one unit;
- Fault analysis strategy directed to detecting, analyzing and/or decreasing at least one fault;
- Maintenance strategy directed to maintaining functionality and comfort of the smart building with the least cost; and
- Overall return in investment strategy directed to increasing the overall monetary return through the complete lifecycle of the smart building.

Accordingly, the strategy to be optimized can be selected in a flexible manner according to the specific application case, underlying technical system, user requirements and especially the target, such as energy consumption or performance.

In another aspect the at least one contractual requirement is a requirement selected from the group comprising:
Date of delivery, date of execution, liquidated damage, penalty in case of delayed delivery or execution, price of the contractual object or service, related costs, amount of the contractual object and duration of a warranty period. Accordingly, the contractual term can be selected in a flexible manner according to the specific application case, underlying technical system and user requirements.

In another aspect the method further comprises at least one step of the following steps:
- managing the smart building and/or the at least unit of the smart building in accordance with the determined optimized strategy, wherein the management comprises controlling and monitoring;
- operating the smart building and/or the at least unit of the smart building in accordance with the determined optimized strategy; and
- constructing, extending, configuring or reconfiguring the smart building and/or the at least unit of the smart building in accordance with the determined optimized strategy.

Accordingly, the determined optimized strategy can be used for managing and/or operating and/or constructing the smart building or any other unit with regard to the smart building. More in general, the strategy can be applied on any building in context of Building automation, also factories.

Referring to the aforementioned target energy-saving, for example the energy-saving strategy can be applied to manage the building. This strategy ignores e.g. the real comfort of occupiers in the building, but optimizes the energy consumption. More specifically, e.g. a monthly amount can be set and if the amount reaches the energy-saving target, the operation time of air conditioners or the intensity of air conditioners will be limited or stopped; otherwise, users are free to operate the electronics.

Referring to the aforementioned target fault analysis, for example the fault analysis strategy can be applied to generate system alerts and drive diagnostic procedures, thereby increasing the reliability of the smart building.

A further aspect of the invention is a technical unit for performing the aforementioned method.

The technical unit may be realized as any device, or any means, for computing, in particular for executing a software, an app, or an algorithm. For example, the unit may comprise a central processing unit (CPU) and a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

A further aspect of the invention is a computer program product directly loadable into an internal memory of a computer, comprising software code portions for performing the steps according to the aforementioned method when said computer program product is running on a computer.

### 4. Short description of the drawings

In the following detailed description, presently preferred embodiments of the invention are further described with reference to the following figures:

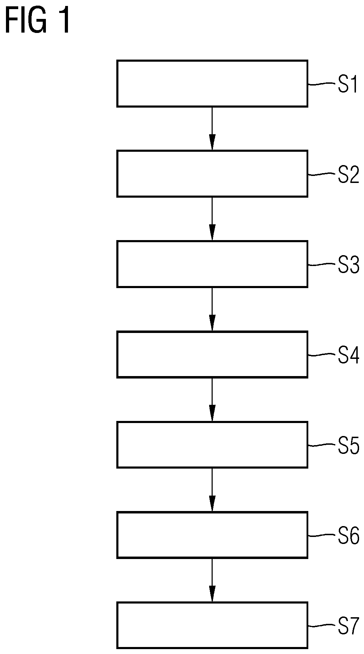

Fig. 1 illustrates a flowchart of the method according to the invention.

### 5. Detailed description of preferred embodiments

Fig. 1 illustrates a flowchart of the method according to the invention with the method steps S1 to S7. The method steps will be explained in the following in more detail.

### Input data

First, the contractual request and the contracts are received as input data S1 to S3. The contracts are contracts between at least two contractual parties A und B, e.g. supplier contracts and customer contracts about a contractual object P. Exemplary contracts are listed in the following. Moreover, technical information is provided as additional input data S4, S5.

Referring to the aforementioned smart building, the technical information can be associated with the building itself or to its units, such as floor or rooms e.g. offices. For example, the information comprises the details that the first and second floors will be used as rented flexible office space to several companies, the third and fourth floors will be rented on long-term basis by a single company. There is an option to transform the first floor to laboratory space.

In other words, the input data comprises both the contractual information and the technical information.

This input data is used to determine and provide the optimized strategy by means of optimization S7.

### Exemplary contracts:

- For the option of shared office space, there is a revenue of EUR 10.000 per month if a laboratory is used. In this case the revenue is EUR 15.000 per month, but this requires an additional insurance for possible contaminations of up to 20 million Euros. The expected lease is subject to uncertainties, because it depends on the overall market situation, and is therefore modeled as such.
- Operating the building will be CO2 neutral in 30% of time during a day if the occupancy is 60% and the configuration is open office space.
- The second floor will be transformable from a configuration in which it is used by one or three organizations at a cost of 10.000C. This can be achieved by re-configuring the walls and enabling a finer granular rights management.

### Use Cases:

According to an embodiment, the optimal allocation of the office space can be calculated based on these contractual agreements, and the additional costs for construction can be balanced with the envisioned benefits. Contractual details with tenants are automatically adapted to meet the needs of all parties and increase expected benefit for the operator.

Moreover, the construction of the smart building or building retrofitting can be performed such that the operating costs are minimized while allowing maximum flexibility. To this end, the supplier contracts including some contractual terms are automatically negotiated.

### Examples include:

The described usage scenarios require the building to be partitionable into up to 20 rights management areas.

In order to ensure 50% of time CO2 neutrality, at average energy consumption of 40kwh, we need to install batteries for 200kwh in order to ensure load balancing.

For each hour of missing CO2 neutrality, a penalty will be paid around 10 cent per kwh to compensate the CO2 production. Each day of non-utilization (due to modernization) costs 10.000 €.

Moreover the planned construction can be adapted in order to minimize financial losses and uncertainties.

### Reference signs

S1 to S7 Method steps

## Claims

1. A computer-implemented method for determining an optimized strategy for a smart building, comprising the steps:
a. Providing a plurality of contracts or contractual alternatives of at least one contract about the smart building or at least one unit of the smart building (S1); wherein
c. each contract is defined in a domain-specific language (S2); wherein
d. each contract comprises at least one contractual requirement regarding the respective smart building or at least one unit of the smart building (S3);
e. Providing technical information regarding the respective smart building or at least one unit of the smart building (S4); wherein
f. the technical information is defined in a domain-specific language (S5);
g. Determining the optimized strategy using an optimization algorithm based on the plurality of contracts or the contractual alternatives and the technical information in accordance with the specified contractual requirement (S6); and
h. Providing the determined optimized strategy (S7).

2. Method according to claim 1, wherein the plurality of contracts comprises at least one contract between at least two parties selected from the group comprising:
a supplier contract; wherein
the supplier contract is a contract between at least one owner or operator of the smart building and at least one supplier; and
a customer contract; wherein
the customer contract is a contract between at least one customer and at least one owner or operator of the smart building.

3. Method according to claim 1 or claim 2, wherein the determined optimized strategy is selected from the group comprising:
- energy-saving strategy directed to saving energy of the smart building or the at least one unit;
- Occupant-capability strategy directed to adapting at least one occupancy criterion of the smart building or the at least one unit;
- Occupant-comfort directed to increasing the occupant comfort;
- Performance strategy directed to increasing the performance of the smart building or the at least one unit;
- Fault analysis strategy directed to detecting, analyzing and/or decreasing at least one fault;
- Maintenance strategy directed to maintaining functionality and comfort of the smart building with the least cost; and
- Overall return in investment strategy directed to increasing the overall monetary return through the complete lifecycle of the smart building.

4. Method according to any of the preceding claims, wherein the at least one contractual requirement is a requirement selected from the group comprising:
Date of delivery, date of execution, liquidated damage, penalty in case of delayed delivery or execution, price of the contractual object or service, related costs, amount of the contractual object and duration of a warranty period.

5. Computer-implemented method according to any of the preceding claims, wherein the method further comprises at least one of the following steps:
- managing the smart building and/or the at least unit of the smart building in accordance with the determined optimized strategy, wherein the management comprises controlling and monitoring; and
- operating the smart building and/or the at least unit of the smart building in accordance with the determined optimized strategy; and
- constructing, extending, configuring or reconfiguring the smart building and/or the at least unit of the smart building in accordance with the determined optimized strategy.

6. A technical unit for performing the method steps according to any of the preceding claims.

7. A computer program product directly loadable into an internal memory of a computer, comprising software code portions for performing the steps according to any of the claims 1 to 5 when said computer program product is running on a computer.
